# EUROPÄISCHE PATENTSCHRIFT

(11) **EP 2 886 693 B1**
(45) Veröffentlichungstag und Bekanntmachung des Hinweises auf die Patenterteilung: **12.07.2017**
(21) Anmeldenummer: 14196305.8
(22) Anmeldetag: 04.12.2014
(51) Int. Cl.: D04H 1/4242, B29B 11/16, B29C 70/12, D04H 1/4274, D04H 1/4366, D04H 1/54

(54) **Vliesstoff aus Carbonfasern und thermoplastischen Fasern**
Nonwoven fabric made of carbon fibres and thermoplastic fibres
Tissu non tissé en fibres de carbone et fibres thermoplastiques

(30) Priorität: 20.12.2013 DE 102013226921
(43) Veröffentlichungstag der Anmeldung: 24.06.2015
(73) Patentinhaber: SGL Automotive Carbon Fibers GmbH & Co. KG, 80939 München (DE)
(72) Erfinder: Roth, Ekkehard, 21376 Salzhausen (DE); Stefani, Hans-Werner, 86845 Grossaitingen (DE)

(56) Entgegenhaltungen:
- EP-A1- 2 642 007
- WO-A1-2011/101094
- WO-A1-2013/175581

## Beschreibung

Die vorliegende Erfindung betrifft einen Carbonfasern enthaltenden Vliesstoff, ein Verfahren zu dessen Herstellung und Faserverbundwerkstoffe enthaltend diesen Vliesstoff.

Carbonfasern werden als Faserverstärkung von thermoplastisch oder duromer gebundenen Faserverbundwerkstoffen eingesetzt. Zur Erreichung maximaler Verstärkungseffekte geschieht dies überwiegend in Form endloser Carbonfaserstoffe wie zum Beispiel Filamentgarne, Multifllamentgarne oder so genannter Rowings. Diese werden überwiegend zur Herstellung von texilen Halbzeugen mit gezielter Faserorientierung, beispielsweise. als unidirektionales Gelege, Muitiaxialgele oder Gewebe verwendet. Für Bauteile in denen es nicht vordergründig auf hohe Belastungsfähigkeit in bestimmten Richtungen ankommt, werden auch Vliesstoffe in Faserverbundwerkstoffen verwendet. Vliesstoffe bestehen aus Wirrfasern, wobei die einzelnen Filamente eine endliche Länge besitzen. Fasern mit endlicher Länge werden auch Stapelfasern genannt.

Carbonfaserstoffe werden seit einigen Jahren in zunehmenden Umfang als hochleistungsfähige Faserstoffbewehrung eingesetzt. Die Hauptanwendungen liegen beispielsweise im Flugzeugbau, Schiffbau, Fahrzeugbau und in Windkraftanlagen. Durch die immer breitere Massenanwendung nimmt die Menge an karbonfaserhaltigen Produktionsabfällen zu ebenso wie der Anfall ausgedienter Altteile.

Carbonfasern sind aufgrund ihres komplizierten Herstellungsprozesses sehr teuer. Die Preise bewegen sich zwischen etwa 15EUR/kg bis zu etwa 300EUR/kg für Spezialtypen. Aus ökonomischen und ökologischen Gründen ist es daher wünschenswert, Möglichkeiten zur Aufbereitung der Abfälle und Altteile zu schaffen und die darin enthaltenen Carbonfaseranteile neuen Anwendungen zuzuführen, in denen sie zumindest teilweise teure Primärcarbonfasem ersetzen können.

In der WO2013/175581 A1 wird die Herstellung eines aus einem Mischvlies von Carbonfasern und thermoplastischen Fasern gesponnenen Garns beschrieben.

In der EP 2642007 A1 wird die Herstellung eines plattenförmigen Halbzeugs aus Faserverbundwerkstoff beschrieben, welches Carbonfasern und wenigstens ein thermoplastisches Matrixmaterial enthält, wobei man Carbonfasern mit thermoplastischen Fasern vermischt und in einem Krempelprozess flächig ablegt, so dass ein Faserflor erzeugt wird, den man in wenigstens einem nachfolgenden Schritt unter Wärmeeinwirkung zu einem Plattenmaterial verpresst.

Aus der WO 2011/101094 A1 ist ein Verfahren zur Herstellung eines plattenförmigen Halbzeugs aus Faserverbundwerkstoff bekannt, welches Carbonfasern und wenigstens ein thermoplastisches Matrixmaterial enthält, wobei man aus carbonfaserhaltigen Abfällen oder Altteilen Carbonfasern isoliert, diese mit thermoplastischen Fasern vermischt und in einem Krempelprozess flächig ablegt, so dass ein Faserflor erzeugt wird, den man in wenigstens einem nachfolgenden Schritt unter Wärmeeinwirkung zu einem Plattenmaterial verpresst.

Der Krempelprozess, mit dem eine Mischung aus Carbonfasern und thermoplastischen Fasern kardiert wird, gestaltet sich häufig problematisch, da es zu ungleichmäßigen Verteilungen der unterschiedlichen Fasertypen kommt. Es entstehen meist zufällige Häufungen der thermoplastischen Fasern, die zu einer Schwächung des fertigen Bauteils führen können, da der Carbonfaseranteil an diesen Stellen geringer ist.

Es ist daher eine Aufgabe der vorliegenden Erfindung, einen Vliesstoff bereitzustellen in dem eine weitestgehend gleichmäßige Verteilung der Carbonfasern und der thermoplastischen Fasern gewährleistet ist.

Eine weitere Schwierigkeit ist die Handhabbarkeit des Vliesstoffs. In der WO 2011/101094 A1 wird der Vliesstoff unmittelbar nach seiner Herstellung mittels Heisskaschieren zu einem plattenförmigen Material umgewandelt, d.h. die Carbonfasern sind dann bereits vollständig imprägniert und in der Matrix gebunden. Der Anteil der thermoplastischen Fasern muss daher bereits im Vliesstoff ausreichend hoch sein, um eine vollständige Imprägnierung zu erzielen.

Häufig ist es jedoch wünschenswert, den Vliesstoff mit weiteren Matrixmaterialien zu imprägnieren. Hierzu ist es notwendig einen Vliesstoff bereitzustellen, der eine ausreichende Stabilität aufweist, um in zur Lagerung, Transport und Zuführung zu weiteren Produktionsschritten beispielsweise auf Rollen auf- und abrollen zu können. Dies stellt eine weitere Aufgabe der vorliegenden Erfindung dar.

Im Rahmen der vorliegenden Erfindung wurde gefunden, dass die Art und Menge der den Carbonfasern zugemischten thermoplastischen Fasern eine entscheidende Rolle für die textile Verarbeitbarkeit zu Vliesstoffen spielt. Überraschend gute Ergebnisse, insbesondere im Hinblick auf die gewünschte gleichmäßige Verteilung der Carbonfasern und der thermoplastischen Fasern, wurden mit thermoplastischen Fasern erzielt, die Polyhydroxyether der allgemeinen Formel (I)

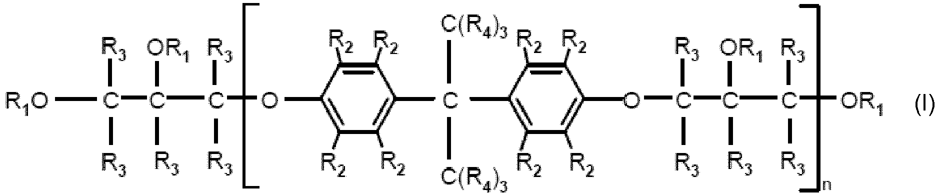

Enthalten und mit einem Gewichtsanteil von 5 bis 20%, bezogen auf das Gesamtgewicht des Vliesstoffs, den Carbonfasern zugefügt wurden.

Die Aufgaben der vorliegenden Erfindung wird demnach gelöst durch einen Vliesstoff umfassend Stapelfasern aus Carbonfasern mit einem Anteil von 80 bis 95 Gew.-%, bezogen auf das Gesamtgewicht des Vliesstoffs, und Stapelfasern aus thermoplastischen Fasern mit einem Anteil von 5 bis 20 Gew.-%, bezogen auf das Gesamtgewicht des Vliesstoffs, dadurch gekennzeichnet, dass die thermoplastischen Fasern Polyhydroxyether der allgemeinen Formel (I) 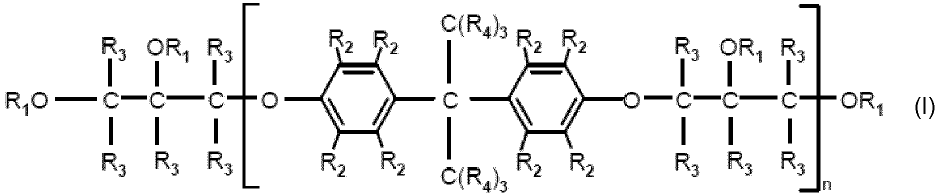 enthalten.

Dieser Polyhydroxyether stellt ein lineares Polymer dar, auch Phenoxyharz genannt, welches grundsätzlich aus einer Reaktion von Bisphenol A oder dessen Derivaten mit Epichlorhydrin oder dessen Derivaten und einer Base, beispielsweise Natriumhydroxid, erhalten werden kann. Chemisch sind Phenoxyharze ähnlich den Epoxyharzen, jedoch mit dem Unterschied, dass Phenoxyharze keine Epoxygruppen enthalten. Dadurch vernetzen die linearen Polymerketten nicht untereinander und man erhält ein Harz mit thermoplastischem Charakter. Dieser thermoplastische Charakter ist Voraussetzung für die Spinnbarkeit des Polymers zu Fasern. Bei der Verwendung von verschiedenen der genannten Derivaten der Reaktionskomponente, werden Polymere mit entsprechenden Resten (R₁ bis R₄) erhalten. Die Derivate, und damit die Reste, sind grundsätzlich so zu wählen, dass die Reste nicht in die Polymerisationsreaktion eingreifen, wodurch ein thermoplastisches Polymer erhalten wird.

Erfindungsgemäß sind die Substituenten R₁ gleich oder unterschiedlich und sind ausgewählt aus der Gruppe bestehend aus -H, -CH₃, -C₂H₅, -C₃H₇, -C₄H₉ und Phenyl.

Die Substituenten R₂ bis R₄ sind ebenfalls jeweils gleich oder unterschiedlich und sind unabhängig voneinander ausgewählt aus der Gruppe bestehend aus -H, -CH₃, -C₂H₅, -C₃H₇, -C₄H₉, Phenyl, Methoxy, Ethoxy und Phenoxy.

Erfindungsgemäß wurde der Vliesstoff einer Temperaturbehandlung oberhalb der Glasübergangstemperatur TG der thermoplastischen Fasern unterzogen, sodass die thermoplastischen Fasern zumindest teilweise erweichen oder schmelzen und die Carbonfasern von der nach dem Abkühlen erstarrten Schmelze zumindest teilweise umhüllt und/oder durch die erstarrte Schmelze zumindest teilweise untereinander verbunden sind. oder, dass der Vliesstoff einer Vernadelung unterzogen wird.

Weiter bevorzugt sind Substituenten mit geringerem Molekulargewicht, wobei R₁ bis R₄ jeweils gleich oder unterschiedlich sind und unabhängig voneinander ausgewählt sind aus der Gruppe bestehend aus -H und -CH₃. Gute Ergebnisse im Hinblick auf die Spinnbarkeit des Polymers und die Fasereigenschaften für die textile Verarbeitung werden erzielt, wenn die Substituenten R₃ gleich oder unterschiedlich sind und entweder Wasserstoff oder Mehtyl darstellen und die Substituenten R₁, R₂ und R₄ Wasserstoffatome darstellen. Am meisten bevorzugt ist, wenn alle Substituenten R₁ bis R₄ Wasserstoffatome sind.

n ist eine natürliche Zahl welche die Anzahl der Monomereinheiten im Polymer wiedergibt. Sie korreliert daher mit dem Molekulargewicht des erfindungsgemäßen Polyhydroxyethers und wir zusätzlich durch die Wahl der Substituenten beeiruflusst. Die Angabe eines möglichen Zahlenbereiches für n ist daher nicht zweckmäßig. Bevorzugte Molekulargewichte, aus welchen sich n ergibt, werden weiter unten beschrieben.

Der Begriff "Stapelfasern" bezeichnet im Rahmen der vorliegenden Erfindung Kurzfasern. Im Gegensatz dazu stehen die sogenannten Endlosfasern oder Endlosfilamente. Mit Stapelfasern können im Rahmen der vorliegenden Erfindung sowohl Kurzfaserbündel, als auch die in den Bündeln vorliegenden einzelnen Filamente gemeint sein.

Der Begriff "Filament" bezeichnet also im Rahmen der vorliegenden Erfindung nicht nur Filamente endloser Länge, sondern auch solche mit endlicher Länge.

Der Ausdruck "Vliesstoff umfassend Stapelfasern aus Carbonfasern und thermoplastischen Fasern bedeutet", dass die thermoplastischen Fasern und die Carbonfasern untereinander gemischt sind und diese Fasermischung keinem bestimmten Raster oder Muster unterliegt, bzw. keine wiederkehrende Faserstruktur aufweist. Gleichwohl können die Fasern im Vliesstoff eine Vorzugsrichtung aufweisen. Beispielsweise bei der Verwendung einer Kardiermaschine ist meist eine Vorzugsrichtung der Faserorientierung in Längrichtung der Vliesbahn zu erkennen.

Der Anteil der Stapelfasern aus Carbonfasern beträgt erfindugnsgemäß 80 bis 95 Gew.-%. bezogen auf das Gesamtgewicht des Vliesstoffs. Besonders gute Ergebnisse im Hinblick auf die gleichmäßige Verteilung der verschiedenen Fasertypen werden erzielt, wenn der Anteil bevorzugt 82 bis 93 Gew.-% beträgt.

Die Art der Carbonfasern ist nicht besonders eingeschränkt. Es können Primär- und/oder Sekundärfasern verwendet werden. Bevorzugt ist jedoch, dass wenigstens ein Teil der Carbonfasern als Sekundärfasern, also in Form von recycelten Fasern eingesetzt wird. Am meisten bevorzugt ist, wenn sämtliche Carbonfasern recycelte Fasern sind. Carbonfaserausgangsmaterial können grundsätzlich sein:
- zerkleinerte Primärfasern,
- zerkleinerte und/oder zerfaserte Gelege-, Gewebe-, oder Geflechtreste,
- zerkleinerte und/oder zerfaserte Fadenabfälle, Rovingreste, Randbeschnitt aus der Gelegefertigung oder Restspulenmaterial,
- zerkleinerte und/oder zerfaserte und/oder thermisch oder mit einem Lösungsmittel vorbehandelte Prepregabfälle oder
- zerkleinerte und/oder zerfaserte und thermisch oder mit einem Lösungsmittel behandelte harzhaltige Abfälle, Hart-CFK-Teile und Altbauteile.

Die Länge der zerkleinerten Carbonfasern ist nicht besonders eingeschränkt. Gute Ergebnisse werden erzielt, wenn mindestens 90% der Stapelfasern aus Carbonfasern, von der Anzahl aller im Vliesstoff vorhandenen Stapelfasern aus Carbonfasern, eine Länge im Bereich von 20 bis 140 mm, bevorzugt zwischen 20 und 120 mm aufweisen.

Hinsichtlich der thermoplastischen Stapelfasern, die erfindungsgemäß Polyhydroxyether umfassen, ist es bevorzugt, dass die thermoplastischen Fasern mindestens ein weiteres Polymer enthalten, ausgewählt aus der Gruppe bestehend aus Polyamid und Polyurethan.

Das Molekulargewicht M_{w} des Polyhydroxyethers ist nicht besonders eingeschränkt. Bevorzugt ist ein Molekulargewicht M_{w} im Bereich von 20.000 bis 85.000 g/mol, weiter bevorzugt 22.000 bis 60.000 g/mol. In diesem Bereich besitzt die thermoplastische Faser nicht nur eine geeignete Glasübergangstemperatur T_{G}, sondern offenbar auch besonders vorteilhafte physikalische Eigenschaften bei Raumtemperatur, wie Biegsamkeit oder Elastizität der Fasern. Es wurde gefunden, dass die textile Verarbeitung zu einem Vlies zusammen mit Carbonfasern eine besonders gleichmäßige Verteilung der unterschiedlichen Fasertypen hervorbringt.

Die Glasübergangstemperatur T_{G} der thermoplastischen Fasern liegt bevorzugt zwischen 70 und 150°C, noch weiter bevorzugt zwischen 80 und 100°C. Diese ist für die Temperatur der weiter unten beschriebenen Heisskaschierung maßgeblich. Beim Überschreiten der Glasübergangstemperatur T_{G} ist die Umwandlung eines festen Polymers in eine gummiartige bis zähflüssige Schmelze zu beobachten.

Die Auswahl des Titers, beziehungsweise die Stärke der einzelnen Filamente der thermoplastischen Fasern beeinflusst ebenfalls die Gleichmäßigkeit der Verteilung der thermoplastischen Fasern im Vliesstoff der vorliegenden Erfindung. Bevorzugt beträgt der Titer der thermoplastischen Fasern 1,3 bis 8,0 dtex, weiter bevorzugt 3,5 bis 7,0 dtex. 1 dtex (Dezitex) entspricht dabei 1 g/10.000 m eines Filaments.

Ebenfalls wurde gefunden, dass sich eine Kräuselung der thermoplastischen Fasern positiv auf die Verteilung der thermoplastischen Fasern im Vliesstoff der vorliegenden Erfindung auswirken kann. Die Kräuselung der einzelnen Filamente wird mit der Bogenzahl angegeben. Die Bogenzahl beschreibt die Anzahl der Auslenkungen an der Faser, wobei jede Auslenkung, Berg und Tal, zählt. Bevorzugt beträgt die Bogenzahl der thermoplastischen Fasern 4 bis 28 cm⁻¹, weiter bevorzugt 8 bis 20 cm⁻¹.

Die Länge der thermoplastischen Fasern ist nicht besonders eingeschränkt. Gute Ergebnisse werden erzielt, wenn mindestens 90% der Stapelfasern aus thermoplastischen Fasern von der Anzahl aller im Vliesstoff vorhandenen Stapelfasern aus thermoplastischen Fasern eine Länge im Bereich von 20 bis 150 mm aufweisen. Bei Fasern mit Kräuselung ist bei der vorstehenden Länge nicht die der gestreckten Fasern gemeint, sondern die Länge des Filaments im ungestreckten, beziehungsweise ungespannten Zustand.

Zur besseren Handhabung ist der Vliesstoff der vorliegenden Erfindung verfestigt. Dies kann beispielsweise mittels Heisskaschierung erreicht werden. Die thermoplastischen Fasern im Vliesstoff werden dabei erweicht oder schmelzen und umhüllen dabei teilweise die Carbonfasern Damit werden die Carbonfasern untereinander verbunden. Nach dem Abkühlen lassen auf Umgebungstemperatur, weist dar Vliesstoff nach dieser Ausführungsform der Erfindung daher keine thermoplastischen Fasern mehr auf, sondern ein Netzwerk aus dem Material der thermoplastischen Fasern, wodurch der Vliesstoff eine gesteigerte Stabilität zur besseren Handhabung besitzt. Er kann aufgewickelt, transportiert und einem anschließenden Verarbeitungsschritt zugeführt werden. Zudem bleibt der Vliesstoff porös, das heisst er kann weiterhin mit einem Matrixbildner imprägniert werden. Eine bevorzugte Ausführungsform der vorliegenden Erfindung stellt daher ein erfindungsgemäßer Vliesstoff dar, der einer Temperaturbehandlung oberhalb der Glasübergangstemperatur T_{G} der thermoplastischen Fasern unterzogen wurde, sodass die thermoplastischen Fasern zumindest teilweise erweichen oder schmelzen und die Carbonfasern von der nach dem Abkühlen erstarrten Schmelze zumindest teilweise umhüllt und/oder durch die erstarrte Schmelze zumindest teilweise untereinander verbunden sind.

Alternativ kann der erfindungsgemäße Vliesstoff jedoch auch mittels anderer dem Textilfachmann bekannten Maßnahmen, wie zum Beispiel der Vernadelung, verfestigt werden.

Ein weiterer Aspekt der vorliegenden Erfindung ist ein Verfahren zur Herstellung eines Vliesstoffs, umfassend die Schritte:
i) Bereitstellen von Stapelfasern aus Carbonfasern,
ii) Bereitstellen von Stapelfasern aus thermoplastischen Fasern,
iii) Zuführen der Stapelfasern aus den Schritten i) und ii) in eine Vorrichtung zur Herstellung eines Vliesstoffes, dadurch gekennzeichnet, dass die Carbonfasern in einer Menge zugeführt werden, so dass die Carbonfasern im Vliesstoff mit einem Anteil von 80 bis 95 Gew.-%, bezogen auf das Gesamtgewicht des Vliesstoffs, vorliegen und die thermoplastischen Fasern in einer Menge zugeführt werden, so dass die thermoplastischen Fasern im Vliesstoff mit einem Anteil von 5 bis 20 Gew.-%, bezogen auf das Gesamtgewicht des Vliesstoffs, vorliegen und wobei die thermoplastischen Fasern Polyhydroxyether der allgemeinen Formel (I) 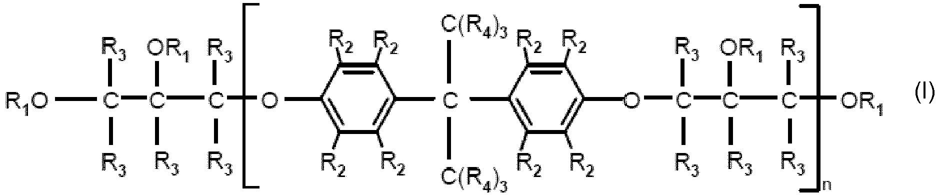 enthalten.

Die Substituenten R₁ sind gleich oder unterschiedlich und sind ausgewählt aus der Gruppe bestehend aus -H, -CH₃, -C₂H₅, -C₃H₇, -C₄H₉ und Phenyl.

Die Substituenten R₂ bis R₄ sind ebenfalls jeweils gleich oder unterschiedlich und sind unabhängig voneinander ausgewählt aus der Gruppe bestehend aus -H, -CH₃, -C₂H₅, -C₃H₇, -C₄H₉, Phenyl, Methoxy, Ethoxy und Phenoxy.

Weiter bevorzugt sind Substituenten mit geringerem Molekulargewicht, wobei R₁ bis R₄ jeweils gleich oder unterschiedlich sind und unabhängig voneinander ausgewählt sind aus der Gruppe bestehend aus -H und -CH₃. Gute Ergebnisse im Hinblick auf die Spinnbarkeit des Polymers und die Fasereigenschaften für die textile Verarbeitung werden erzielt, wenn die Substituenten R₃ gleich oder unterschiedlich sind und entweder Wasserstoff oder Mehtyl darstellen und die Substituenten R₁, R₂ und R₄ Wasserstoffatome darstellen. Am meisten bevorzugt ist, wenn alle Substituenten R₁ bis R₄ Wasserstoffatome sind.

Eine erfindungsgemäße Ausführungsform des erfindungsgemäßen Verfahrens ist, dass der Vliesstoff nach dem Verfahrensschritt iii) einer Temperaturbehandlung oberhalb der Glasübergangstemperatur T_{G} der in Verfahrensschritt ii) bereitgestellten thermoplastischen Fasern unterzogen wird, sodass die thermoplastischen Fasern zumindest teilweise erweichen oder schmelzen und die Carbonfasern von der nach dem Abkühlen erstarrten Schmelze zumindest teilsweise umhüllt und/oder durch die erstarrte Schmelze zumindest teilweise untereinander verbunden sind. Hierdurch wird die Stabilität des Vliesstoffs erhöht, wodurch der Vliesstoff besser handhabbar, beispielsweise für den Transport oder die Zuführung zu einem weiteren Verarbeitungsschritt. Die Temperatur der Temperaturbehandlung ist dabei nicht besonders eingeschränkt. Sie ist jedoch mindestens so hoch, wie die Glasübergangstemperatur T_{G} des Materials der thermoplastischen Fasern. Das erweichte oder geschmolzene, thermoplastische Material muss dabei mindestens so hoch erhitzt werden, dass es die Carbonfasern zumindest teilweise benetzt, sollte jedoch nicht so flüssig sein, dass es aus dem Vliesstoff ausläuft. Der hierfür erforderliche Temperaturbereich kann durch einfaches Ausprobieren ermittelt werden.

Bevorzugt wird der Vliesstoff zumindest während eines Zeitraums der Ausführungsgemäßen Temperaturbehandlung mit Druck beaufschlagt werden. Der Druck dient dabei der besseren Benetzung der Carbonfasern mit dem geschmolzenen, thermoplastischen Material. Zudem kann der Vliesstoff so auf eine gewünschte Dicke eingestellt werden. Die Höhe des Druck ist damit nicht besonders eingeschränkt. Die Druck- und Temperaturbehandlung wird bevorzugt mittels einer Kaschiereinheit (z.B. heisse Pressrollen) durchgeführt, in der der Vliesstoff durch ein gewünschtes Spaltmaß gefahren wird.

Ein alternativer erfindungsgemäßer Verfahrensschritt zu der erfindungsgemäßen Temperaturbehandlung ist, dass der Vliesstoff nach dem Verfahrensschritt iii) einer Vernadelung unterzogen wird.

Die bereitgestellten thermoplastischen Fasern in Verfahrensschritt ii) weisen vorzugsweise eine Kräuselung mit einer Bogenzahl von 4 bis 28 cm⁻¹, vorzugsweise 8 bis 20 cm⁻¹ auf. Mindestens 90% dieser Stapelfasern, bezogen auf die Anzahl aller in diesem Verfahrensschritt bereitgestellten thermoplastischen Fasern, weisen gemäß einer bevorzugten Ausführungsform eine Länge im Bereich von 20 bis 150 mm auf.

Die Art der Bereitstellung der thermoplastischen Fasern in Verfahrensschritt ii) ist nicht besonders eingeschränkt. Diese können beispielsweise als Flocken oder als lose Schüttung einzelner Stapelfasern oder Stapelfaserbündel vorliegen, oder auch als ein in einem vorherigen Verfahren hergestellten Vliesstoff bereitgestellt werden. Im Falle der Bereitstellung als Vliesstoff wird dieser im erfindungsgemäßen Verfahrensschritt iii) entweder oberhalb oder unterhalb der bereitgestellten Carbonfasern abgelegt bevor beide der Vorrichtung zur Herstellung eines Vliesstoffs zugeführt werden. Bevorzugt ist jedoch, dass die thermoplastischen Fasern in Form von Flocken auf die bereitgestellten Carbonfasern gemäß Schritt i) aufgebracht werden. Hierdurch werden besonders gute Ergebnisse im Hinblick auf die Gleichmäßigkeit der Verteilung der unterschiedlichen Fasertypen im Vliesstoff erzielt. Ebenfalls bevorzugt ist, dass die Carbonfasern und die thermoplastischen Fasern in Mischern gemischt und gespeichert werden. Aus dem entsprechenden Speicher werden dann die geöffneten und gemischten Fasern via Rohrleitungen zu einem Speiser geliefert. Der Speiser wiederum liefert ein beispielsweise 8 - 10 cm dickes Faserband (eine Lage aus einer losen Schüttung der Fasermischung aus Carbon- u. thermoplastischen Fasern) an die Krempelanlage, bzw. Kadiermaschine. Die Krempelanlage greift sich von diesem Band kontinuierlich die Fasermischung ab und produziert damit eine Florschicht mit beispielsweise 30 g/m² +/- 5g/m².

Die Art der Bereitstellung der Carbonfasern ist ebenfalls nicht besonders eingeschränkt. Sie können beispielsweise als lose Schüttung oder in Form von geschnittenen Textilien, wie beispielsweise Geweben, Gelegen oder anderen flächigen Textilien, vorliegen. Gemäß einem Aspekt der vorliegenden Erfindung umfassen die in Verfahrensschritt i) bereitgestellten Carbonfasern bevorzugt recycelte Carbonfasern, weiter bevorzugt bestehen die Carbonfasern vollständig aus Recyclingmateria. Dabei können Carbonfaserreste, wie beispielsweise Verschnitt und Produktionsabfälle aus Carbonfasern verwendet werden. Es ist jedoch auch möglich, die Carbonfasern aus Altteilen von Carbonfaserverbundwerkstoffen zu verwenden, indem man die Carbonfasern zuvor von Ihrer Matrix weitgehend trennt. Geeignete Maßnahmen zur Trennung von Carbonfasern und Matrix in Verbundwerkstoffen sind dem Fachmann bekannt. Es wurde im Rahmen der vorliegenden Erfindung gefunden, dass die Stabilität eines Bauteils, das ein Carbonfaservliesstoff aus Neufasern enthält, nicht viel höher ist, als bei der Verwendung von sekundären Carbonfasern.

Die Carbonfasern werden bevorzugt auf eine geeignete Länge geschnitten, beispielsweise mittels Schneidmesser. Im dem Fall, dass die Carbonfasern originär als textile Flächengebilde vorliegen, werden diese bevorzugt in Quadrate, sogenannte Chips, mit einer Kantenlänge von 40 bis 150 mm, weiter bevorzugt 55 bis 100 mm und noch weiter bevorzugt 65 bis 85 mm geschnitten. Dies kann durch ein beliebiges Schneidverfahren erfolgen, beispielsweise mittel Längs- und Querschneiden oder Stanzen. Um die geschnittenen Carbonfasern weiter für den Krempelprozess vorzubereiten werden diese anschließend bevorzugt in einer geeigneten Vorrichtung geöffnet, sodass sich die Chips in einzelne Bündel von Fasern und die Bündel in Einzelfasern auflösen können.

Bevorzugt weisen mindestens 90% der in Verfahrensschritt i) bereitgestellten Stapelfasern aus Carbonfasern, bezogen auf die Anzahl aller dieser bereitgestellten Stapelfasern aus Carbonfasern, eine Länge im Bereich von 20 bis 140 mm, bevorzugt zwischen 20 und 120 mm auf, auf welche sie in den oben beschriebenen Verfahren geschnitten werden.

Bevorzugt ist weiterhin, dass die in Verfahrensschritt i) bereitgestellten recycelten Carbonfasern mindestens zusätzlichen Bestandteil ausgewählt aus der Gruppe bestehend aus Glas-, Aramid-, Polyamid-, Polyesterfasern und Bindermaterialien enthalten.

Die erfindungsgemäße Vorrichtung zur Herstellung eines Vliesstoffes ist bevorzugt eine Kardiermaschine.

Weiterhin ist bevorzugt, dass der Vliesstoff während der Temperaturbehandlung mit Druck beaufschlagt wird.

Weiterhin ist bevorzugt, dass der Vliesstoff zur Lagerung oder zum Transport auf eine Rolle aufgewickelt wird.

Ein weiterer Aspekt der vorliegenden Erfindung ist ein Faserverbundwerkstoff umfassend Verstärkungsfasern und Matrix, wobei die Matrix ein Polymer ausgewählt aus der Gruppe bestehend aus Duroplast und Thermoplast umfasst und die Verstärkungsfasern einen erfindungsgemäßen Vliesstoff umfassen.

Ein weiterer Aspekt der vorliegenden Erfindung ist ein Verfahren zur Herstellung eines erfindungsgemäßen Faserverbundwerkstoffs umfassend die Schritte
- Herstellen eines Vliesstoffs gemäß dem erfindungsgemäßen Verfahren und
- Imprägnieren des Vliesstoffs mit einem flüssigen Polymervorläufer oder einer Polymerschmelze.

Der Schritt des Imprägnierens ist nicht besonders eingeschränkt und kann auf sämtlichen, dem Fachmann bekannten Methoden basieren. Bei einer thermoplastischen Matrix ist es bevorzugt, dass zunächst das Matrixmaterial in flächiger Form, beispielsweise als Gewebe, Folie oder ebenfalls als ein Vliess vorliegt. Anschließend wird dieses mit dem erfindungsgemäßen Vliesstoff zusammen geführt.

## Patentansprüche

1. Vliesstoff umfassend Stapelfasern aus Carbonfasern mit einem Anteil von 80 bis 95 Gew.-%, bezogen auf das Gesamtgewicht des Vliesstoffs, und Stapelfasern aus thermoplastischen Fasern mit einem Anteil von 5 bis 20 Ges.-%, bezogen auf das Gesamtgewicht des Vliesstoffe, **dadurch gekennzeichnet, dass** die thermoplastischen Fasern Polyhydroxyether der allgemeinen Formel (I) 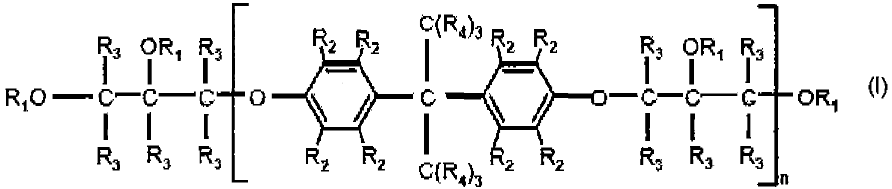 enthalten, wobei
die Substituenten R₁ gleich oder unterschiedlich sind und ausgewählt sind aus der Gruppe bestehend aus -H, -CH₃, -C₂H₅, -C₃H₇, -C₄H₈ und Phenyl und
die Substituenten R₂, R₃ und R₄ jeweils gleich oder unterschiedlich sind und unabhängig voneinander ausgewählt sind aus der Gruppe bestehend aus -H, -CH₃, -C₂H₅, -C₃H₇, -C₄H₈, Phenyl, Methoxy, Ethoxy und Phanoxy, wobei der Vliesstoff einer Temperaturbehandlung oberhalb der Glasübergangstemperatur T_{G} der thermoplastischen Fasern unterzogen wurde, sodass die thermoplastischen Fasern zumindest teilweise erweichen oder schmelzen und die Carbonfasern von der nach dem Abkühlen erstarrten Schmelze zumindest teilweise umhüllt und/oder durch die erstarrte Schmelze zumindest teilweise untereinander verbunden sind, oder, dass der Vliesstoff einer Vernadelung unterzogen wird.

2. Vliesstoff nach Anspruch 1, **dadurch gekennzeichnet, dass** der Glasübergangstemperatur T_{G} der thermoplastischen Fasern 70 bis 150°C, vorzugsweise 80 bis 100°C beträgt.

3. Vliesstoff nach einem der Ansprüche 1 oder 2, **dadurch gekennzeichnet, dass** der Titer der thermoplastischen Fasern 1,3 bis 8,0 dtex, vorzugsweise 3,5 bis 7,0 dtex beträgt.

4. Vliesstoff nach einem der Ansprüche 1 bis 3, **dadurch gekennzeichnet, dass** die thermoplastischen Fasern eine Kräuselung mit einer Bogenzahl von 4 bis 28 cm⁻¹, vorzugsweise 8 bis 20 cm⁻¹ aufweisen.

5. Vliesstoff nach einem der Ansprüche 1 bis 4, **dadurch gekennzeichnet, dass** mindestens 90% der Stapelfasern aus Carbonfasern, von der Anzahl aller im Vliesstoff vorhandenen Stapelfasern aus Carbonfasern, eine Länge im Bereich von 20 bis 140 mm, bevorzugt zwischen 20 und 120 mm aufweisen.

6. Vliesstoff nach einem der Ansprüche 1 bis 5, **dadurch gekennzeichnet, dass** mindestens 90% der Stapelfasern aus thermoplastischen Fasern von der Anzahl aller im Vliesstoff vorhandenen Stapelfasern aus thermoplastischen Fasern eine Länge im Bereich von 20 bis 150 mm aufweisen,

7. Vliesstoff nach einem der Ansprüche 1 bis 6, **dadurch gekennzeichnet, dass** die Stapelfasern aus Carbonfasern recycelten Carbonfasern umfassen, bevorzugt aus recycelten Carbonfasern bestehen,

8. Verfahren zur Herstellung eines Vliesstoffs, umfassend die folgenden Schritte:
i) Bereitstellen von Stapelfasern aus Carbonfasern,
ii) Bereitstellen von Stapelfasern aus thermoplastischen Fasern,
iii) Zuführen der Stapelfasern aus den Schritten i) und ii) in eine Vorrichtung zur Herstellung eines Vliesstoffes, **dadurch gekennzeichnet, dass** die Carbonfasern in einer Menge zugeführt werden, so dass die Carbonfasern im Vliesstoff mit einem Anteil von 80 bis 95 Gew.-%, bezogen auf das Gesamtgewicht des Vliesstoffs, vorliegen und die thermoplastischen Fasern in einer Menge zugeführt werden, so dass die thermoplastischen Fasern im Vliesstoff mit einem Anteil von 5 bis 20 Gew.-%, bezogen auf das Gesamtgewicht des Vliesstoffs, vorliegen und wobei die thermoplastischen Fasern Polyhydroxyether der allgemeinen Formel (I) 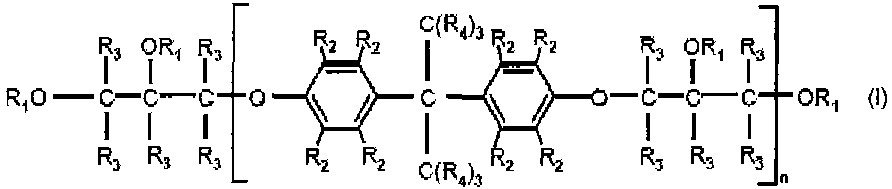 enthalten, wobei
die Substituenten R₁ gleich oder unterschiedlich sind und ausgewählt sind aus der Gruppe bestehend aus -H, -CH₃, -C₂H₅, -C₃H₇, -C₄H₉ und Phenyl und
die Substituenten R₂, R₃ und R₄ jeweils gleich oder unterschiedlich sind und unabhängig voneinander ausgewählt sind aus der Gruppe bestehend aus -H, -CH₃, -C₂H₅, -C₃H₇, -C₄H₉, Phenyl, Methoxy, Ethoxy und Phenoxy, wobei der Vliesstoff nach dem Verfahrensschritt iii) einer Temperaturbehandlung oberhalb der Glasübergangstemperatur T_{G} der in Verfahrensschritt ii) bereitgestellten thermoplastischen Fasern unterzogen wird, sodass die thermoplastischen Fasern zumindest teilweise erweichen oder schmelzen und die Carbonfasern von der nach dem Abkühlen erstarrten Schmelze zumindest teilweise umhüllt und/oder durch die erstarrte Schmelze zumindest teilweise untereinander verbunden sind, oder, dass der Vliesstoff nach dem Verfahrensschritt iii) einer Vernadelung unterzogen wird.

9. Verfahren nach Anspruch 8, **dadurch gekennzeichnet, dass** die in Verfahrensschritt i) bereitgestellten Carbonfasern recycelte Carbonfasern umfassen, bevorzugt aus recycelten Carbonfasern bestehen.

10. Verfahren nach Anspruch 9, **dadurch gekennzeichnet, dass** die in Verfahrensschritt i) bereitgestellten recycelten Carbonfasern mindestens zusätzlichen Bestandteil ausgewählt aus der Gruppe bestehend aus Glas-, Aramid-, Polyamin-, Polyesterfasern und Bindermaterialien enthalten.

11. Verfahren nach einem der Ansprüche 8 bis 10, **dadurch gekennzeichnet, dass** der Vliesstoff während der Temperaturbehandlung mit Druck beaufschlagt wird.

12. Verfahren nach einem der Ansprüche 8 bis 11, **dadurch gekennzeichnet, dass** der Vliesstoff zur Lagerung oder zum Transport auf eine Rolle aufgewickelt wird.

13. Faserverbundwerkstoff umfassend Verstärkungsfasern und Matrix, wobei die Matrix ein Polymer ausgewählt aus der Gruppe bestehend aus Duroplast und Thermoplast umfasst, **dadurch gekennzeichnet, dass** die Verstärkungsfasern einen Vliesstoff nach einem der Ansprüche 1 bis 7 umfassen.

## Claims

1. Non-woven fabric comprising carbon-fibre staple fibres in an amount of from 80 to 95 wt.-%, based on the overall weight of the non-woven fabric, and thermoplastic-fibre staple fibres in an amount of from 5 to 20 wit.%, based on the overall weight of the non-woven fabric, **characterised in that** the thermoplastic fibres contain polyhydroxy ether of general formula (I) 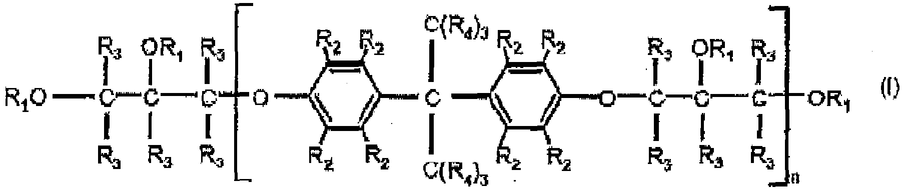 in which
the substituents R₁ are the same or different and are selected form the group consisting of -H, -CH₃, -C₂H₅, -C₃H₇, -C₄H₉ and phenyl, and
the substituents R₂, R₃ and R₄ are the same or different in each case and are selected, independently of one another, from the group consisting of-H, -CH₃, -C₂H₅, -C₃H₇, -C₄H₉, phenyl, methoxy, ethoxy and phenoxy, the non-woven fabric having been subjected to heat treatment above the glass transition temperature T_{G} of the thermoplastic fibres such that the thermoplastic fibres soften or melt at least in part, and the carbon fibres are surrounded, at least in part, by the molten material that solidifies after cooling and/or are interconnected at least in part by the solidified molten material, or such that the non-woven fabric is subjected to needling,

2. Non-woven fabric according to claim 1, **characterised in that** the glass transition temperature T_{G} of the thermoplastic fibres is from 70 to 150 °C, preferably from 80 to 100 °C.

3. Non-woven fabric according to either claim 1 or claim 2, **characterised in that** the titre of the thermoplastic fibres is from 1.3 to 8.0 dtex, preferably from 3.5 to 7.0 dtex.

4. Non-woven fabric according to any of claims 1 to 3, **characterised in that** the thermoplastic fibres have a crimp having a curl count of from 4 to 28 cm⁻¹, preferably from 8 to 20 cm⁻¹.

5. Non-woven fabric according to any of claims 1 to 4, **characterised in that** at least 90 % of all the carbon-fibre staple fibres present in the non-woven fabric have a length in the range of from 20 to 140 mm, preferably between 20 and 120 mm.

6. Non-woven fabric according to any of claims 1 to 5, **characterised in that** at least 90 % of all the thermoplastic-fibre staple fibres present in the non-woven fabric have a length in the range of from 20 to 150 mm.

7. Non-woven fabric according to any of claims 1 to 6, **characterised in that** the carbon-fibre staple fibres comprise, preferably consist of, recycled carbon fibres.

8. Method for producing a non-woven fabric, comprising the following steps:
i) providing carbon-fibre staple fibres,
ii) providing thermoplastic-fibre staple fibres,
iii) feeding the staple fibres from steps i) and ii) into a device for producing a non-woven fabric, **characterised in that** the carbon fibres are fed in in such an amount that the carbon fibres are present in the non-woven fabric in an amount of from 80 to 95 wt.%, based on the overall weight of the non-woven fabric, and the thermoplastic fibres are fed in in such an amount that the thermoplastic fibres are present in the non-woven fabric in an amount of from 5 to 20 wt.%, based on the overall weight of the non-woven fabric, and the thermoplastic fibres containing polyhydroxy ether of general formula (I) 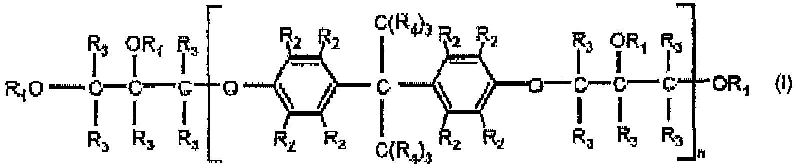 in which
the substituents R₁ are the same or different and are selected from the group consisting of -H, -CH₃, -C₂H₅, -C₃H₇, -C₄H₉ and phenyl, and
the substituents R₂, R₃ and R₄ are the same or different in each case and are selected, independently of one another, from the group consisting of -H, -CH₃, -C₂H₅, -C₃H₇, -C₄H₉, phenyl, methoxy, ethoxy and phenoxy, the non-woven fabric being subjected, following method step iii), to heat treatment above the glass transition temperature T_{G} of the thermoplastic fibres provided in method step ii) such that the thermoplastic fibres soften or melt at least in part, and the carbon fibres are surrounded, at least in part, by the molten materiaf that solidifies after cooling and/or are interconnected at least in part by the solidified molten maternal or such that the non-woven fabric is subjected to needling following method step iii).

9. Method according to claim 8, **characterised in that** the carbon fibres provided in method step i) comprise, preferably consist of, recycled carbon fibres.

10. Method according to claim 9, **characterised in that** the recycled carbon fibres provided in method step i) contain at least one additional component selected from the group consisting of glass, fibres, aramid fibres, polyamide fibres, polyester fibres and binder materials.

11. Method according to any of claims 8 to 10, **characterised in that** the non-woven fabric is pressurised during the heat treatment.

12. Method according to any of claims 8 to 11, **characterised in that** the non-woven fabric is wound onto a reel for storage or transportation.

13. Fibre composite material comprising reinforcing fibres and a matrix, the matrix comprising a polymer selected from the group consisting of thermosetting plastics and thermoplastics, **characterised in that** the reinforcing fibres comprise a non-woven fabric according to any of claims 1 to 7.

## Revendications

1. Tissu non tissé comprenant des fibres discontinues constituées de fibres de carbone, dont la proportion est comprise entre 80 et 95 % en poids, mesurée par rapport au poids total du tissu non tissé, ainsi que des fibres discontinues constituées de fibres de thermoplastique, dont la proportion est comprise entre 5 et 20 % en poids, mesurée par rapport au poids total du tissu non tissé, **caractérisé en ce que** les fibres de thermoplastique contiennent du polyhydroxyéther de formule générale (I) : 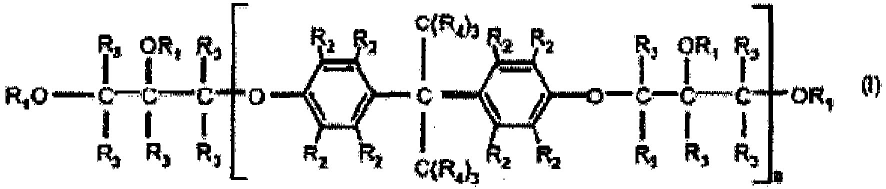 dans lequel
les substituants R₁ sont identiques ou différents et sont choisis dans le groupe constitué par -H, -CH₃, -C₂H₅, -C₃H₇, -C₄H₉ et phényle ; et
les substituants R₂, R₃ et R₄ sont respectivement identiques ou différents et sont choisis indépendamment les uns des autres dans le groupe constitué par -H, -CH₃, -C₂H₅, -C₃H₇, -C₄H₉, phényle, méthoxy, éthoxy et phénoxy, dans lequel le tissu non tissé a été soumis à un traitement thermique se situant au dessus de la température de transition vitreuse T_{G} des fibres de thermoplastique, de telle sorte que les fibres de thermoplastique se ramollissent ou fondent, tout au moins en partie, et les fibres de carbone sont enrobées, tout au moins en partie, par la masse fondue qui s'est solidifiée à l'issue du refroidissement et/ou sont liées les unes aux autres, tout au moins en partie, par l'intermédiaire de la masse fondue qui s'est solidifiée, ou de telle sorte que le tissu non tissé est soumis à un aiguilletage.

2. Tissu non tissé selon la revendication 1, **caractérisé en ce que** la température de transition vitreuse T_{G} des fibres de thermoplastique est comprise entre 70 et 150 °C, de préférence entre 80 et 100 °C.

3. Tissu non tissé selon l'une des revendications 1 ou 2, **caractérisé en ce que** le titre des fibres de thermoplastique est compris entre 1,3 et 8,0 dtex, de préférence entre 3,5 et 7,0 dtex.

4. Tissu non tissé selon l'une des revendications 1 à 3, **caractérisé en ce que** les fibres de thermoplastique présentent un gondolage avec un nombre de courbure compris entre 4 et 28 cm⁻¹, de préférence entre 8 et 20 cm⁻¹.

5. Tissu non tissé selon l'une des revendications 1 à 4, **caractérisé en ce qu'**au moins 90 % des fibres discontinues constituées de fibres de carbone, parmi le nombre de toutes les fibres discontinues constituées de fibres de carbone qui sont présentes dans le tissu non tissé, présentent une longueur se situant dans une plage comprise entre 20 et 140 mm, de préférence entre 20 et 120 mm,

6. Tissu non tissé selon l'une des revendications 1 à 5, **caractérisé en ce qu'**au moins 90 % des fibres discontinues constituées de fibres de thermoplastique, parmi le nombre de toutes les fibres discontinues constituées de fibres de thermoplastique qui sont présentes dans le tissu non tissé, présentent une longueur se situant dans une plage comprise entre 20 et 150 mm.

7. Tissu non tissé selon l'une des revendications 1 à 6, **caractérisé en ce que** les fibres discontinues constituées de fibres de carbone comprennent des fibres de carbone recyclées et sont composées de préférence à partir de fibres de carbone recyclées,

8. Procédé destiné à la fabrication d'un tissu non tissé, comprenant les phases suivantes :
i) la préparation de fibres discontinues constituées de fibres de carbone ;
ii) la préparation de fibres discontinues constituées de fibres de thermoplastique ;
iii) l'alimentation des fibres discontinues issues des phases i) et ii) dans un dispositif destiné à la fabrication d'un tissu non tissé, **caractérisé en ce que** les fibres de carbone sont ajoutées dans une certaine quantité, de telle sorte que les fibres de carbone sont présentes dans le tissu non tissé avec une proportion comprise entre 80 et 95 % en poids, mesurée par rapport au poids total du tissu non tissé, et les fibres de thermoplastique sont ajoutées dans une certaine quantité, de telle sorte que les fibres de thermoplastique sont présentes dans le tissu non tissé avec une proportion comprise entre 5 et 20 % en poids, mesurée par rapport au poids total du tissu non tissé, et dans lequel les fibres de thermoplastique contiennent du polyhydroxyéther de formule générale (I) : 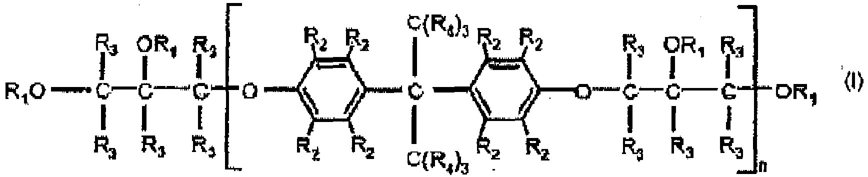 dans lequel
les substituants R₁ sont identiques ou différents et sont choisis dans le groupe constitué par -H₁ -CH₃, -C₂H₅, -C₃H₇, -C₄H₉ et phényle : et
les substituants R₂, R₃ et R₄ sont respectivement identiques ou différents et sont choisis indépendamment les uns des autres dans le groupe constitué par -H, -CH₃, -C₂H₅, -C₃H₇, -C₄H₉, phényle, méthoxy, éthoxy et phénoxy, dans lequel le tissu non tissé est soumis, à l'issue de la phase de procédé iii), à un traitement thermique se situant au dessus de la température de transition vitreuse T_{G} des fibres de thermoplastique qui ont été préparées durant la phase de procédé ii), de telle sorte que les fibres de thermoplastique se ramollissent ou fondent, tout au moins en partie, et les fibres de carbone sont enrobées, tout au moins en partie, par la masse fondue qui s'est solidifiée à l'issue du refroidissement et/ou sont liées les unes aux autres, tout au moins en partie, par l'intermédiaire de la masse fondue qui s'est solidifiée, ou de telle sorte que le tissu non tissé est soumis à un aiguilletage à l'issue de la phase de procédé iii).

9. Procédé selon la revendication 8, **caractérisé en ce que** les fibres de carbone recyclées qui ont été préparées lors de la phase de procédé i) comprennent des fibres de carbone et sont composées de préférence à partir de fibres de carbone recyclées.

10. Procédé selon la revendication 9, **caractérisé en ce que** les fibres de carbone recyclées qui ont été préparées lors de la phase de procédé i) contiennent au moins un ingrédient supplémentaire choisi dans le groupe constitué par les fibres de verre, les fibres en aramide, les fibres de polyamide, les fibres de polyester et des matériaux de liaison.

11. Procédé selon l'une des revendications 8 à 10, **caractérisé en ce que** le tissu non tissé est soumis à une pression pendant le traitement thermique

12. Procédé selon l'une des revendications 8 à 11, **caractérisé en ce que** le tissu non tissé est enroulé sur une bobine en vue de son stockage ou de son transport.

13. Matériau composite à base de fibres comprenant des fibres de renforcement et une matrice, dans lequel la matrice comprend un polymère choisi dans le groupe constitué par le Duroplast et le Thermoplast, **caractérisé en ce que** les fibres de renforcement comprennent un tissu non tissé selon l'une des revendications 1 à 7.
